# EUROPÄISCHE PATENTSCHRIFT

(11) **EP 3 167 173 B1**
(45) Veröffentlichungstag und Bekanntmachung des Hinweises auf die Patenterteilung: **24.03.2021**
(21) Anmeldenummer: 15728772.3
(22) Anmeldetag: 22.05.2015
(51) Int. Cl.: F01N 13/18, F16L 55/04, F16L 51/02, F16L 27/10, F16L 11/20, F16L 11/15, F16L 11/11, F16L 27/111

(54) **LEITUNGSANORDNUNG**
LINE ASSEMBLY
SYSTÈME DE CANALISATION

(30) Priorität: 10.07.2014 DE 102014109667; 10.07.2014 DE 102014109668
(43) Veröffentlichungstag der Anmeldung: 17.05.2017
(73) Patentinhaber: Witzenmann GmbH, 75175 Pforzheim (DE)
(72) Erfinder: BALMER, Bert, 75180 Pforzheim (DE); LUDWIG, Jörg, 75177 Pforzheim (DE); RÖSLER, René, 76137 Karlsruhe (DE); ROTHFUSS, Daniel, 75334 Straubenhardt (DE); SEEGER, Bernd, 75181 Pforzheim (DE)
(74) Vertreter: Lemcke, Brommer & Partner Patentanwälte Partnerschaft mbB
(86) Internationale Anmeldenummer: PCT/EP2015/061411
(87) Internationale Veröffentlichungsnummer: WO 2016/005096

(56) Entgegenhaltungen:
- EP-A2- 1 010 872
- DE-A1-102010 037 162
- DE-A1-102013 111 033
- DE-U1- 8 225 704
- GB-A- 2 318 860
- US-A- 3 110 324
- US-A- 5 803 127
- US-A1- 2013 015 652

## Beschreibung

Die Erfindung betrifft eine Leitungsanordnung nach dem Oberbegriff des Anspruchs 1, aufweisend: einen zumindest abschnittweise gewellten Metallschlauch und eine Innenkomponente, die zumindest über eine Teillänge des Metallschlauchs radial innerhalb desselben angeordnet ist.

Leitungsanordnungen der eingangs definierten Art werden beispielsweise in Abgasanlagen von Kraftfahrzeugen eingesetzt. Der Metallschlauch sorgt hierbei für eine gewünschte mechanische Flexibilität, insbesondere zur Schwingungsentkopplung, während die Innenkomponente für eine definierte Strömungsführung innerhalb des Metallschlauchs sorgt und zudem auch eine thermische Isolierfunktion übernimmt.

Aus der DE 10 2010 037 162 A1 sind Dämpfungselemente zur Anordnung in einem gewellten Außenschlauch bekannt.

Die DE 82 25 704 U1 beschreibt elastische Rohrverbindungen für Rohrteile eines Auspuffsystems, bei denen zwischen Wellentälern eines inneren Rohrleitungselements und Wellenbergen eines äußeren Rohrleitungselements Zwischenringe aus einem verdichteten Drahtgewebe oder dergleichen angeordnet sind.

Die GB 2 318 860 A offenbart eine konzentrische Anordnung zweier Ringwellschläuche, zwischen denen eine Schraubenfeder als Abstandshalter angeordnet ist. Die genannte Feder ist gebildet aus einem gewellten Drahtabschnitt, der zwischen dem inneren Ringwellschlauch und dem äußeren Ringwellschlauch angeordnet ist, um die genannten Leitungselemente relativ zueinander koaxial zu positionieren.

Um auftretende Schwingungen der Leitungsanordnung zu bedämpfen, wurde in der Vergangenheit vorgeschlagen, den Metallschlauch außen mit einer Außenkomponente in Form eines Außengestrickes zu überziehen, was jedoch zusätzlichen Aufwand bei der Montage und hinsichtlich der Kosten nach sich zieht. Außerdem kommt es zu Reibverschleiß durch Reibung des Außengestrickes am Metallschlauch. Die erreichbare Dämpfungswirkung ist nicht exakt einstellbar, sondern es ergibt sich eine gewisse, unerwünschte Streuung bei der Dämpfung durch das Außengestricke. Des Weiteren hat sich gezeigt, dass die Dämpfungseigenschaften des Außengestrickes über die Lebensdauer der Leitungsanordnung nicht konstant sind. Zudem unterliegt das Außengestricke aufgrund seiner äußeren Anordnung der Witterung/Korrosion. Schließlich hat sich auch als nachteilig erwiesen, dass bei der Befestigung und Kraftumlenkung des Außengestrickes regelmäßig eine Vorwelle mit reduziertem Außendurchmesser erforderlich ist, was mit entsprechenden, zusätzlichen Anforderungen an den Metallschlauch einhergeht.

Diese Vielzahl von inhärenten Nachteilen soll durch die Schaffung einer neuartigen Leitungsanordnung überwunden werden, welche ohne Verwendung eines Außengestrickes zu einer guten und dauerhaften Bedämpfung des Metallschlauchs führt und hierbei den Montageaufwand sowie die entstehenden Kosten deutlich verringert.

Erfindungsgemäß gelöst wird die Aufgabe durch eine Leitungsanordnung mit den Merkmalen des Anspruchs 1. Bevorzugte Weiterbildungen der erfindungsgemäßen Leitungsanordnung sind in den Unteransprüchen definiert.

Eine erfindungsgemäße Leitungsanordnung umfasst einen zumindest abschnittweise gewellten Metallschlauch und eine als Wickelschlauch (Liner), beispielsweise als Haken- oder Agraff-Liner, mit entsprechenden Profillücken ausgebildete Innenkomponente, die zumindest über eine Teillänge des Metallschlauchs radial innerhalb desselben angeordnet ist; sie umfasst weiterhin wenigstens ein Kopplungselement, welches Kopplungselement zwischen einer Außenkrempe des Metallschlauchs und einer Außenfläche der Innenkomponente angeordnet ist und welches Kopplungselement dazu ausgebildet ist, den Metallschlauch durch mechanische Kopplung mit der Innenkomponente zu bedämpfen.

Die erfindungsgemäße Leitungsanordnung sieht weiterhin vor, dass das Kopplungselement für einen Eingriff in die Profillücken der Innenkomponente ausgebildet und dabei vorzugsweise an eine Steigung dieser Profillücken angepasst ist.

Weil das Kopplungselement in die genannten Profillücken der Innenkomponente eingreift, ist es zu Montagezwecken außerdem möglich, das Kopplungselement bzw. die Innenkomponente durch Einschrauben relativ zu dem Metallschlauch zu positionieren, was eine besonders genaue axiale Relativpositionierung und damit verbunden eine gezielte Bedämpfung des Metallschlauchs möglich macht.

Erfindungsgemäß kontaktiert das wenigstens eine Kopplungselement zu diesem Zweck zumindest im Betrieb der Leitungsanordnung einerseits eine Außenkrempe des Metallschlauchs und andererseits die Außenfläche der Innenkomponente.

Im Rahmen dieser Beschreibung bezeichnet der Begriff "Außenkrempe" allgemein einen Bereich des gewellten Metallschlauchs, welcher Bereich radial außerhalb des Bereiches kleinsten lichten Innendurchmessers des Metallschlauchs angeordnet ist, wobei letztgenannter Bereich auch als Innenkrempe bezeichnet wird. Im Bereich der Koppelstelle, also dort, wo das Kopplungselement den Metallschlauch kontaktiert, kann der Metallschlauch anders ausgeformt sein als in Bereichen mit "normalen Wellen". Eine an die Erfordernisse des Koppelelements angepasste Ausformung des Metallschlauchs bzw. der Welle im Bereich der Koppelstelle liegt somit ausdrücklich mit im Rahmen der Erfindung. Insbesondere die Kontaktierung des Metallschlauchs im Bereich einer Außenkrempe (oder einer hier mit umfassten seitlichen Flanke) mit Abstand zur Innenkrempe des Metallschlauchs sorgt für eine Erhöhung der Lebensdauer, da gerade die Innenkrempe des Metallschlauchs besonders hoch belastet ist, beispielsweise aufgrund einer thermischen Beaufschlagung. Vorbekannte Lösungen, bei denen zwischen der Innenkomponente und der Innenkrempe des Metallschlauchs entsprechende Abstandselemente vorgesehen sind, sind diesbezüglich als nachteilig anzusehen.

Erfindungsgemäß erfolgt also die Dämpfung des Metallschlauchs, welcher als Balg ausgebildet sein kann, über die innere Reibung der Innenkomponente durch Verbindung von Innenkomponente und Metallschlauch (Balg). Auf diese Weise lässt sich insbesondere das Außengestricke einsparen, und das Auftreten von Reibverschleiß auf der Außenkrempe des Metallschlauchs wird verhindert.

In diesem Zusammenhang kann auch vorgesehen sein, dass es - abgesehen von dem wenigstens einen Kopplungselement - keinen physischen Kontakt zwischen Innenkomponente und Metallschlauch gibt, wodurch sich Reibverschleiß in diesem Bereich vermeiden lässt. Aufgrund des somit geringeren Reibverschleißes ist es sogar möglich, bei einer mehrlagigen Ausgestaltung des Metallschlauchs auf wenigstens eine Schlauchlage zu verzichten bzw. dessen Gesamtwandstärke zu reduzieren.

Aufgrund der angesprochenen Vermeidung eines Kontakts von Innenkomponente und Metallschlauch wird die Entstehung von Klappergeräuschen wirksam verhindert, ohne dass zu diesem Zweck eine zusätzliche und kostenaufwendige Umstrickung der Innenkomponente (Linerumstrickung) erforderlich wäre. Insgesamt ergibt sich in jedem Fall eine deutliche Kostenreduktion.

In Weiterbildung des erfindungsgemäßen Gegenstands kann das wenigstens eine Kopplungselement bei einer bestimmten axialen Position entlang der Leitungsanordnung zwischen der Innenfläche des Metallschlauchs und einer Außenfläche der Innenkomponente angeordnet sein, um ganz gezielt die Ausbildung bestimmter Schwingungen des Metallschlauchs bzw. der Leitungsanordnung insgesamt durch mechanische Kopplung mit der Innenkomponente zu bedämpfen. Je nach Positionierung des Kopplungselements bzw. der Kopplungselemente zwischen Metallschlauch und Innenkomponente lässt sich die Ausbildung aller relevanten Schwingungsmodi verhindern.

Zu diesem Zweck wird beispielsweise mindestens ein Kopplungselement in einer bestimmten Welle des Metallschlauchs positioniert und ragt dabei in die lichte Weite des Metallschlauchs hinein, so dass es diesen im Bereich der Außenkrempe kontaktiert. Die eingeschobene Innenkomponente geht dabei ebenfalls in Kontakt mit dem Kopplungselement.

Auf diese Weise ist es einerseits möglich, den Metallschlauch ganz gezielt an bestimmten Stellen zu bedämpfen, um das Schwingungsverhalten selektiv zu beeinflussen. Andererseits ist es möglich, die verbleibende flexible Länge der Innenkomponente, die sich zwischen entsprechenden Kontaktstellen mit Kopplungselementen befindet, in einen besonders hoch belasteten Bereich der Leitungsanordnung zu legen.

Die Kopplungselemente müssen nicht in Metall ausgebildet sein, sondern können auch thermisch besser isolierende Werkstoff umfassen, um einen Wärmetransport von innen nach außen zu verhindern, was insbesondere bei Abgasanwendungen einen besonderen Vorteil darstellt.

Im Zuge einer ersten Weiterbildung der erfindungsgemäßen Leitungsanordnung kann vorgesehen sein, dass das wenigstens eine Kopplungselement im Wesentlichen am Ort oder zumindest in der Nähe eines Schwingungsbauchs einer unbedämpften Schwingungsmode des Metallschlauchs oder der Gesamtanordnung aus Metallschlauch und Innenkomponente angeordnet ist.

Zusätzlich kann jedoch vorgesehen sein, dass mehrere Kopplungselemente bei verschiedenen Positionen entlang der Leitungsanordnung vorgesehen sind, um im Wesentlichen alle relevanten Schwingungsmoden zu unterbinden, worauf bereits hingewiesen wurde.

Es kann außerdem vorgesehen sein, dass durch Anordnung mehrerer Kopplungselemente bei verschiedenen Positionen entlang der Leitungsanordnung eine Aufteilung des Metallschlauchs in zwei oder mehr vorzugsweise ungleiche, speziell verschieden lange, Schlauchpakete oder Schlauchabschnitte erreicht ist. Des Weiteren kann die Aufteilung des Metallschlauchs derart gewählt sein, dass die Schwingungen der Schlauchpakete oder Schlauchabschnitte sich durch Phasenverschiebung gegenseitig beeinflussen, vorzugsweise destruktiv, um das Schwingungsverhalten insgesamt positiv zu beeinflussen.

Im Zuge einer wieder anderen Weiterbildung der erfindungsgemäßen Leitungsanordnung kann vorgesehen sein, dass die Position des wenigstens einen Kopplungselements auf die (zu einer gegebenen Schwingungs-Eigenfrequenz gehörende) Eigenform oder Schwingungsform oder Schwingungsmode des Metallschlauchs abgestimmt ist, um Schwingungen gezielt zu bedämpfen. Vorzugsweise ist das wenigstens eine Kopplungselement im Wesentlichen am Ort oder in der Nähe eines Schwingungsbauchs einer unbedämpften Schwingungsmode des Metallschlauchs oder der Gesamtanordnung aus Metallschlauch und Innenkomponente angeordnet.

Im Zuge einer wieder anderen Ausgestaltung der erfindungsgemäßen Leitungsanordnung kann vorgesehen sein, dass das Kopplungselement den Metallschlauch und/oder die Innenkomponente an einer Anzahl von Kontaktstellen über den Umfang berührt. Diese Kontaktstellen können als über den Umfang distinkte Kontaktstellen ausgebildet sind. Alternativ ist es jedoch auch möglich, dass das Kopplungselement den Metallschlauch und/oder die Innenkomponente im Wesentlichen vollumfänglich-flächig berührt.

Im Bereich der Kontaktstellen kann der Metallschlauch abweichend von seiner sonstigen, insbesondere "normal gewellten" Ausgestaltung ausgebildet sein, worauf im Zusammenhang mit dem Begriff "Außenkrempe" bereits hingewiesen wurde.

Um Beschädigungen und Verschleiß zu vermeiden, sieht eine wieder andere Weiterbildung der erfindungsgemäßen Leitungsanordnung vor, dass das Kopplungselement an den Kontaktstellen abgerundet oder umgebogen ausgebildet ist.

Eine andere vorteilhafte Weiterbildung der erfindungsgemäßen Leitungsanordnung sieht vor, dass das Kopplungselement als ein im Wesentlichen über wenigstens einen vollen Umfang der Innenkomponente und/oder des Metallschlauchs sich erstreckendes Element ausgebildet ist. Alternativ kann jedoch auch vorgesehen sein, dass das Kopplungselement als ein über einen Teilumfang der Innenkomponente und/oder des Metallschlauchs sich erstreckendes Elemente ausgebildet ist. Dabei können mehrere solcher Kopplungselemente über einen vollen Umfang der Innenkomponente und/oder des Metallschlauchs verteilt angeordnet sein. Dazwischen können Lücken vorhanden sein, oder die genannten Kopplungselemente können sich zumindest paarweise überlappen.

Eine wieder andere Weiterbildung der erfindungsgemäßen Leitungsanordnung sieht vor, dass das Kopplungselement als zumindest einfach unterbrochene geometrische Struktur oder in anderer Weise verformbar ausgebildet ist. Dies ermöglicht es, das Kopplungselement durch die lichte Weite des Metallschlauchs im Bereich einer Innenkrempe desselben einzuführen und dann in den Bereich einer Außenkrempe desselben aufzuweiten, so dass sich eine erleichterte Montage ergibt.

Grundsätzlich kann das Kopplungselement als ein biegbares, insbesondere radial aufweitbares Blechteil ausgebildet sein. Alternativ ist jedoch auch eine Ausgestaltung des Kopplungselements als ein insbesondere federnder Drahtabschnitt möglich.

Das Kopplungselement kann Verdickungen, Nasen oder eine Materialdicke aufweisen, die größer sind/ist als eine halbe Außenkrempenbreite (in Axialrichtung des Wellschlauchs) der Außenkrempe im Betrieb der Leitungsanordnung, das heißt auch bei Verformungen derselben. Auf diese Weise wird verhindert, dass einzelne, über den Umfang verteilte Kopplungselemente aneinander vorbei verrutschen, sich gegenseitig blockieren und so die angestrebte Dämpfungswirkung verhindern.

Eine wieder andere Weiterbildung der erfindungsgemäßen Leitungsanordnung sieht vor, dass eine Materialdicke des Kopplungselements kleiner oder gleich einer Breite von Profillücken der Innenkomponente ist. Auf diese Weise kann das Kopplungselement in die genannten Profillücken der Innenkomponente eingreifen, insbesondere wenn letztere als Haken- oder Agraff-Liner ausgebildet ist, so dass eine gezielte axiale Positionierung des Kopplungselements erreichbar ist.

Eine wieder andere Weiterbildung der erfindungsgemäßen Leitungsanordnung sieht vor, dass das wenigstens eine Kopplungselement klemmend zwischen Außenkrempe des Metallschlauchs und Innenkomponente gehalten ist. Auf diese Weise ergibt sich eine sichere und dauerhafte Anlage, und die angestrebte Dämpfungswirkung ist gewährleistet.

Alternativ oder zusätzlich kann vorgesehen sein, dass das wenigstens eine Kopplungselement an seinen Kontaktstellen mit dem Metallschlauch und/oder mit der Innenkomponente stoffschlüssig verbunden ist, vorzugsweise durch Verschweißen.

Es wurde bereits angesprochen, dass das wenigstens eine Kopplungselement zwecks Bedämpfung bestimmter Schwingungen der Leitungsanordnung eine gezielte axiale Positionierung relativ zum Metallschlauch aufweisen kann. Speziell kann das wenigstens eine Kopplungselement hierzu im Wesentlichen am Ort oder in der Nähe eines Schwingungsbauchs einer unbedämpften Schwingungsmode des Metallschlauchs oder der Gesamtanordnung aus Metallschlauch und Innenkomponente angeordnet sein.

Schließlich zeichnet sich eine weitere Ausgestaltung der erfindungsgemäßen Leitungsanordnung dadurch aus, dass der Metallschlauch und die Innenkomponente, mit Ausnahme etwaiger Anbindungsstellen in den endständigen Anschlussbereichen der Leitungsanordnung und/oder mit Ausnahme der Position des wenigstens einen Kopplungselements, insbesondere gemäß der vorstehend beschriebenen gezielten axialen Positionierung, relativ voneinander beabstandet sind, um Berührungen und Verschleiß nach Möglichkeit zu vermeiden.

Durch die Erfindung bzw. ihre Weiterbildungen erreichbare Vorteile betreffen die lokale Fixierung der Innenkomponente nebst Nutzung der inneren Reibung der Innenkomponente zur Bedämpfung des außenliegenden Metallschlauchs, wodurch sich das Außengestricke und gegebenenfalls sogar eine Schlauchlage einsparen bzw. dessen Gesamtwandstärke reduzieren lassen. Die vorgestellten möglichen Ausgestaltungen des Kopplungselements vermeiden die Verwendung von Drahtpressringen, welche regelmäßig zu Problemen mit der erreichbaren technischen Sauberkeit führen. Da kein Außengestricke zum Einsatz kommt, kann als Metallschlauch insbesondere ein durchgehend gewellter Balg ohne Vorwellen oder dergleichen Verwendung finden, was wiederum eine Kostenersparnis bedeutet. Durch gezielte Positionierung des wenigstens einen Kopplungselements lässt sich das dynamische Verhalten der Leitungsanordnung je nach Ausgestaltung des Metallschlauchs bzw. Balgs selektiv einstellen.

Dadurch, dass das Kopplungselement vorzugsweise in die äußere Wellung des Metallschlauchs (Außenkrempe) eingreift, wird der Kopplungskontakt von der ohnehin schon hoch belasteten Innenkrempe des Metallschlauchs weg verlagert, was die Standzeit der Anordnung deutlich erhöhen kann.

Durch die im Rahmen von Ausgestaltungen der vorliegenden Erfindung vorgesehenen geringen Anlageflächen zwischen Kopplungselement und Metallschlauch bzw. Innenkomponente wird die durch Wärmebrücken übertragene Wärme verringert, wodurch Wärmeverluste reduziert sind, was insbesondere bei Abgasanwendung von Vorteil ist. Außerdem ergibt sich ein reduzierter Reibverschleiß.

Weitere Vorteile und Eigenschaften der Erfindung ergeben sich aus der nachfolgenden Beschreibung von Ausführungsbeispielen anhand der Zeichnung.
- Figur 1: zeigt, teilweise aufgeschnitten, eine erste Ausgestaltung der erfindungsgemäßen Leitungsanordnung mit einem Metallbalg und einem als Innenkomponente innerhalb des Metallbalgs angeordneten Wickelschlauch nebst einer Anzahl von Kopplungselementen;
- Figur 2: zeigt eine Leitungsanordnung im Wesentlichen gemäß Figur 1 mit alternativ ausgebildeten Kopplungselementen;
- Figur 3: zeigt eine weitere mögliche Ausgestaltung eines Kopplungselements;
- Figur 4: zeigt einen Querschnitt durch eine erfindungsgemäße Leitungsanordnung mit weiteren, alternativ ausgebildeten Kopplungselementen;
- Figur 5: zeigt einen Querschnitt durch eine weitere erfindungsgemäße Leitungsanordnung mit einem anderen Kopplungselement;
- Figur 6: zeigt einen Querschnitt durch eine weitere erfindungsgemäße Leitungsanordnung mit einem anderen Kopplungselement;
- Figur 7: zeigt einen Querschnitt durch eine weitere erfindungsgemäße Leitungsanordnung mit einem anderen Kopplungselement;
- Figur 8: zeigt eine weitere erfindungsgemäße Leitungsanordnung mit einem Kopplungselement, im Querschnitt und in einer Draufsicht;
- Figur 9: zeigt eine weitere erfindungsgemäße Leitungsanordnung mit einer Anzahl von Kopplungselementen, im Querschnitt und in einer Draufsicht;
- Figur 10: zeigt eine andere Ausgestaltung des Kopplungselements bei einer erfindungsgemäßen Leitungsanordnung;
- Figur 11: zeigt noch eine weitere Ausgestaltung des Kopplungselements bei einer erfindungsgemäßen Leitungsanordnung;
- Figur 12: zeigt eine weitere mögliche Ausgestaltung des Kopplungselements bei einer erfindungsgemäßen Leitungsanordnung;
- Figur 13: zeigt noch eine alternative Ausgestaltung des Kopplungselements bei einer erfindungsgemäßen Leitungsanordnung; und
- Figur 14: zeigt schematisch mögliche, unbedämpfte Schwingungsmodi, die sich bei einer nicht erfindungsgemäß bedämpften Leitungsanordnung ausbilden können.

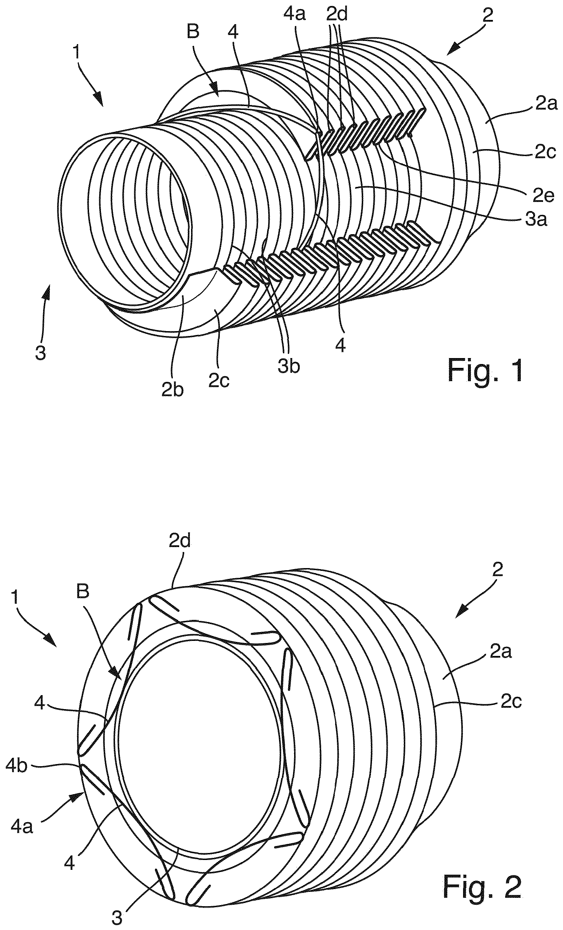

Figur 1 zeigt perspektivisch eine - teilweise aufgeschnittene - erfindungsgemäße Leitungsanordnung, die in ihrer Gesamtheit mit dem Bezugszeichen 1 bezeichnet ist. Die Leitungsanordnung 1 umfasst einen zumindest abschnittweise gewellten Metallschlauch 2, der vorliegend als Metallbalg mit glattzylindrischen, endständigen Anschlussbereichen 2a, 2b ausgebildet ist. Benachbart der Anschlussbereiche 2a, 2b weist der Metallbalg (oder kurz: Balg) 2 jeweils eine Vorwelle 2c mit verminderter Wellenhöhe auf. Dieses Merkmal ist jedoch im Rahmen der vorliegenden Erfindung nicht zwingend ausgebildet und somit lediglich optional.

Radial innerhalb des Balgs 2 ist eine Innenkomponente 3 angeordnet, die sich zumindest über eine Teillänge des Balgs 2, vorliegend über dessen gesamte Länge, erstreckt. Vorliegend ist die Innenkomponente 3 als Wickelschlauch oder Liner ausgebildet, beispielsweise mit einem Haken- oder Agraff-Profil.

Zwischen dem Metallbalg 2 und der Innenkomponente 3 sind eine Anzahl von Kopplungselementen 4 angeordnet, welche Kopplungselemente 4 zwischen einer Außenkrempe 2d des Balgs 2 und einer Außenfläche 3a der Innenkomponente 3 angeordnet sind. Die Kopplungselemente 4 sind dazu ausgebildet und entsprechend angeordnet, eine physikalische Verbindung zwischen der Innenkomponente 3 und dem Balg 2 herzustellen und so den Balg 2 durch mechanische Kopplung mit der Innenkomponente 3, die eine innere Reibung aufweist, zu bedämpfen.

Wichtig ist dabei, dass die Kopplungselemente 4 den Balg 2 an dessen Innenseite im Bereich der Außenkrempe 2d kontaktieren - nicht im Bereich einer insbesondere thermisch höher belasteten Innenkrempe, die in Figur 1 exemplarisch mit Bezugszeichen 2e bezeichnet ist.

Gemäß der Darstellung in Figur 1 sind die Kopplungselemente 4 im Wesentlichen nach Art einfacher Drahtabschnitte ausgebildet, die den Balg 2 mit ihren (abgerundeten) Enden 4a punktuell kontaktieren. Durch eine ausreichende Dicke des Drahts im Verhältnis zur lichten Weite des Balgs 2 im Bereich der Außenkrempe 2d ist gewährleistet, dass aneinanderstoßende Kopplungselemente 4 sich nicht undefiniert aneinander vorbeischieben können. Insbesondere kann vorgesehen sein, dass die Dicke des Materials der Kopplungselemente 4 größer als die halbe (Außenkrempen-)Breite des Balgs 2 im Bereich der Außenkrempen 2d ist. Zusätzlich oder alternativ können in dem genannten Bereich an den Kopplungselementen 4 endständige Verdickungen, Nasen oder dergleichen vorgesehen sein, um ein undefiniertes Verrutschen der Kopplungselemente 4 zu verhindern.

Im Bereich zwischen ihren Enden 4a liegen die Kopplungselemente 4 in einem Bereich B außen an der Innenkomponente 3 an, um auf diese Weise eine dämpfende, mechanische Kopplung zwischen Innenkomponente 3 und Balg 2 herzustellen. Dabei kann - nicht nur bei der Ausgestaltung gemäß Figur 1 - beabsichtigt sein, dass die Kopplungselemente 4 in Profillücken 3b der Innenkomponente 3 gezielt eingreifen, bei welcher Innenkomponente 3 es sich um einen Wickelschlauch, beispielsweise mit Haken- oder Agraff-Profil, handelt.

Aufgrund der mechanischen Kopplung zwischen der dämpfenden Innenkomponente 3 und dem Balg 2, welche durch die Kopplungselemente 4 erreicht wird, ist es grundsätzlich möglich, auf eine zusätzliche Bedämpfung der Leitungsanordnung 1 durch ein konventionell außerhalb des Balgs 2 angeordnetes Metallgestricke gänzlich zu verzichten. Damit entfallen grundsätzlich auch die zur Befestigung des Gestrickes regelmäßig vorhandenen Endhülsen im Bereich der Anschlussenden 2a, 2b. Aufgrund des Fortfalls des Gestrickes ist auch die bereits erwähnte Vorwelle 2c des Balgs 2 verzichtbar, welche nach dem Stand der Technik für eine definierte Umlenkung des Gestrickes vorgesehen ist.

Die nachfolgenden Figuren 2 bis 13 zeigen alternative Ausgestaltungen der Kopplungselemente 4, die nicht in einer Mehrzahl vorhanden sein müssen, sondern deren Funktion auch durch ein einzelnes Kopplungselement realisiert werden kann.

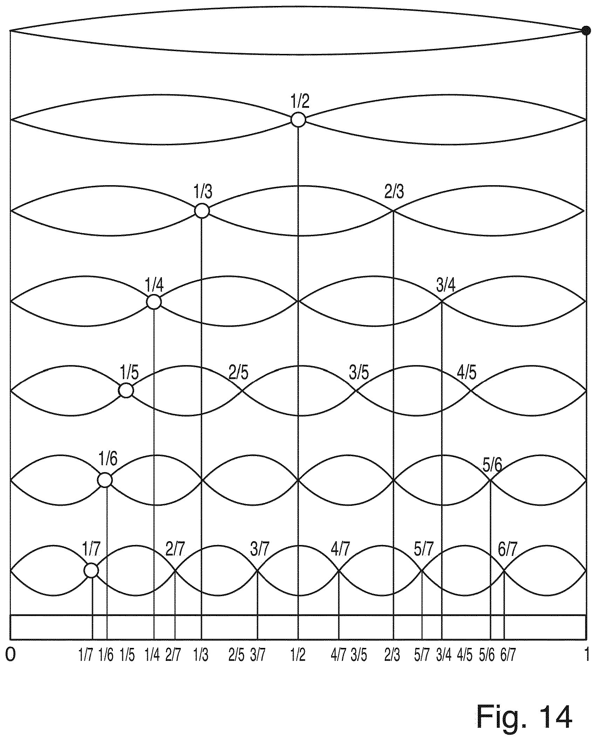

Des Weiteren kann vorgesehen sein, die genannten Kopplungselemente 4 nicht nur an einer einzigen axialen Position längs der Leitungsanordnung 1 vorzusehen, sondern sie gezielt an mehreren Positionen zur Bedämpfung bestimmter Schwingungsmodi der Leitungsanordnung 1 anzuordnen. Hierauf wird weiter unten noch anhand von Figur 14 noch genauer eingegangen.

Gemäß Figur 2 sind die Kopplungselemente 4, anders als in Figur 1, nicht entsprechend dem Balg 2 konvex, sondern konkav gekrümmt. An ihren Enden 4a weisen die Kopplungselemente 4 Umbiegungen um 180° auf, um die bereits erwähnten Abrundungen zu schaffen. Mit den abgerundeten Enden 4a liegen die Kopplungselemente 4 wiederum im Bereich einer Außenkrempe 2d des Balgs an, während sie im Bereich B die Innenkomponente 3 kontaktieren und so für die beabsichtigte mechanische Kopplung bzw. Bedämpfung des Balgs 2 sorgen.

Gemäß Figur 2 sind fünf Kopplungselemente 4 im Wesentlichen lückenlos über den Umfang des Balgs 2 angeordnet. Die Erfindung ist jedoch keinesfalls auf eine derartige Anzahl und/oder Anordnung beschränkt. Auch gemäß Figur 2 kann durch geeignete Materialdicke der Kopplungselemente 4 sichergestellt werden, dass diese in Umfangsrichtung nicht aneinander vorbeirutschen können. Alternativ oder zusätzlich ist es auch möglich, die Kopplungselemente 4 im Bereich der Enden 4a mit geeigneten Verdickungen oder dergleichen auszubilden.

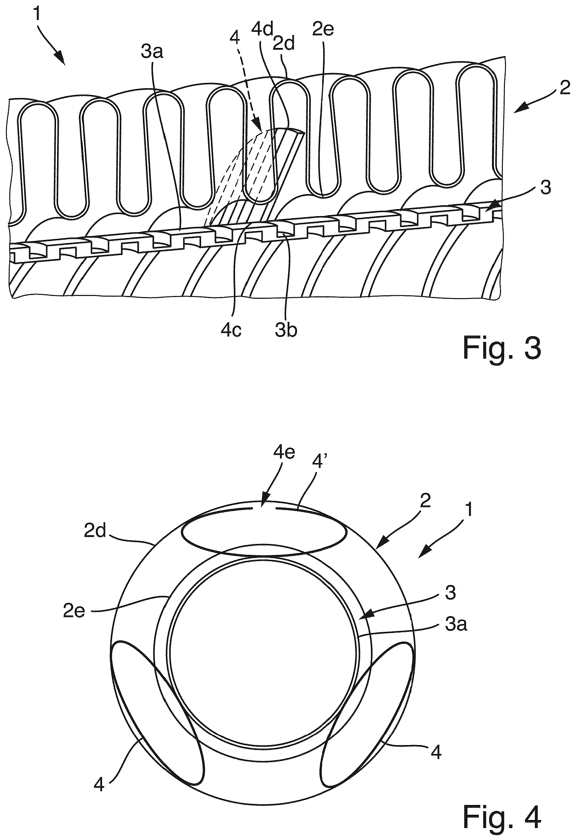

Figur 3 zeigt ein weiteres Beispiel für eine mögliche Ausgestaltung des Kopplungselements bzw. der Kopplungselemente 4. Das Kopplungselement 4 weist hier keinen (kreis-)runden Querschnitt auf, sondern ist eher scheibenartig ausgebildet, wobei es mit seiner Innenkante 4c die Innenkomponente 3 und mit seiner Außenkante 4d dem Balg 2 kontaktiert. Die Berührung zwischen Kopplungselement 4 und Balg 2 erfolgt nicht genau im Scheitel der Außenkrempe 2d, sondern mehr im Flankenbereich - jedoch deutlich entfernt von der Innenkrempe 2e des Balgs 2. Eine solche Ausgestaltung soll durch die vorliegende Erfindung und insbesondere durch den Wortlaut der beigefügten Patentansprüche ausdrücklich mit abgedeckt sein.

Besonders gut ist in Figur 3 die profilierte Ausgestaltung der Außenfläche 3a der Innenkomponente 3 zu entnehmen. Alternativ zu der in Figur 3 dargestellten Ausführungsform, bei der das Kopplungselement 4 der Innenkomponente 3 in einem Bereich außerhalb der Profillücken kontaktiert, ist auch eine Ausgestaltung möglich, bei der das Kopplungselement 4 - speziell dessen Innenkante 4c - in eine solche Profillücke 3b der Innenkomponente eingreift. Eine solche Ausgestaltung hat auch den Vorteil, dass eine relativ genaue axiale Positionierung des Kopplungselements 4 ermöglicht wird.

Figur 4 zeigt eine Anordnung von drei Kopplungselementen 4, 4', die mit Lücke über dem Umfang des Balgs 2 verteilt angeordnet sind und hierbei wiederum die Außenkrempe 2d des Balgs 2 und die Außenfläche 3a der Innenkomponente 3 kontaktieren. Die Kopplungselemente 4 sind nach Art geschlossener Drahtringe ausgebildet, während Kopplungselemente 4' bei Bezugszeichen 4e eine Lücke oder Unterbrechung aufweist, was insbesondere eine Montage des Kopplungselements 4' erleichtert. Es sei an dieser Stelle darauf hingewiesen, dass grundsätzlich die Montage der Kopplungselemente 4, 4' dergestalt erfolgen kann, dass diese innerhalb des lichten Innendurchmessers des Balgs 2 im Bereich der Innenkrempe 2e eingeführt und dann in den Bereich der Außenkrempe 2d aufgeweitet werden.

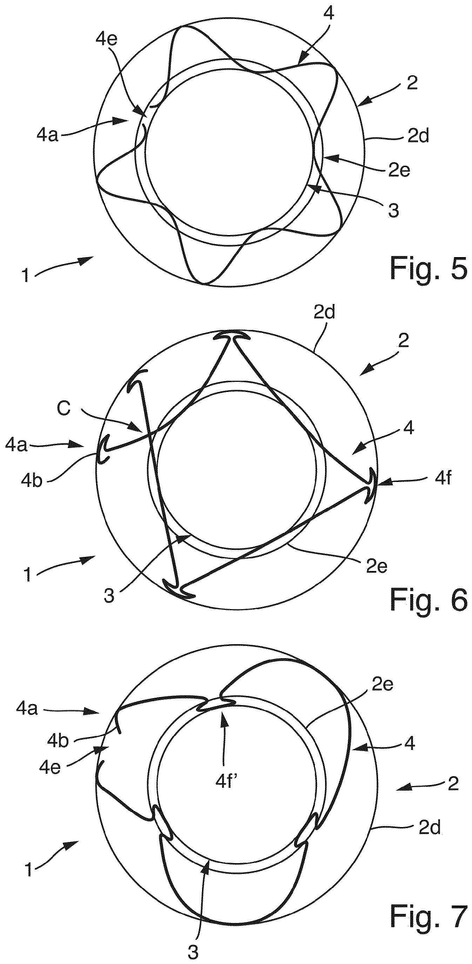

Figuren 5 bis 7 zeigen Ausgestaltungen von Kopplungselementen 4, die jeweils - bezogen auf eine gegebene axiale Position längs der Leitungsanordnung 1 - einstückig ausgeführt sind, also nicht aus mehreren Einzelelementen bestehen, wie bei den Ausgestaltungen gemäß den Figuren 1, 2 und 4.

Gemäß Figur 5 ist das Kopplungselement 4 etwa sternförmig mit - ohne Beschränkung - fünf an den Spitzen jeweils abgerundeten "Zacken" ausgebildet. Bei Bezugszeichen 4e weist das Kopplungselement 4 eine Öffnung auf. Mit den genannten "Zacken" kontaktierte das Kopplungselement 4 den Balg 2 im Bereich der Außenkrempe 2d, während es an seinen Stellen kleinsten Innendurchmessers an der Innenkomponente 3 anliegt.

Gemäß Figur 6 ist das Kopplungselement 4 nach Art eines offenen Polygonzugs ausgebildet, wobei an den Ecken etwa pilzförmige Strukturen 4f ausgebildet sind, die für eine verschleißarme Anlage an der Außenkrempe 2d des Balgs 2 sorgen. Vorliegend finden sich drei derartiger Strukturen 4f, während das Kopplungselement 4 im Bereich seiner Enden 4a wiederum Umbiegungen 4b aufweist, um auch hier den Verschleiß im Bereich der Außenkrempe 2d des Balgs 2 zu mindern.

In den Bereichen zwischen den Strukturen 4f bzw. 4b liegt das Kopplungselement 4 an der Innenkomponente 3 an, was etwa der Anlage gemäß Figur 2 entspricht.

Bei Bezugszeichen C kreuzen sich zwei Abschnitte des Kopplungselements 4. An dieser Stelle C können entsprechende (komplementäre) Strukturen an den betreffenden Abschnitten des Kopplungselements 4 vorgesehen sein, um ein Vorbeirutschen der genannten Abschnitte aneinander zu verhindern.

Gemäß Figur 7 sind pilzförmige Anlagestrukturen 4f' analog den Strukturen 4f in Figur 6 in denjenigen Abschnitten des Kopplungselements 4 ausgebildet, an denen dieses die Innenkomponente 3 berührt. Dazwischen finden sich gleichsinnig zu der Außenkrempe 2d des Balgs gekrümmte Bereiche, mit denen das Kopplungselement 4 die Außenkrempe 2d des Balgs 2 berührt. Vorliegend sind drei der genannten Anlagestrukturen 4f' und entsprechend drei Kontaktbereiche mit der Außenkrempe 2d des Balgs 2 ausgebildet, wobei einer der zuletzt genannten Kontaktbereiche bei Bezugszeichen 4e unterbrochen ist. Die dort ausgebildeten Enden 4a weisen wiederum Umbiegungen 4b auf.

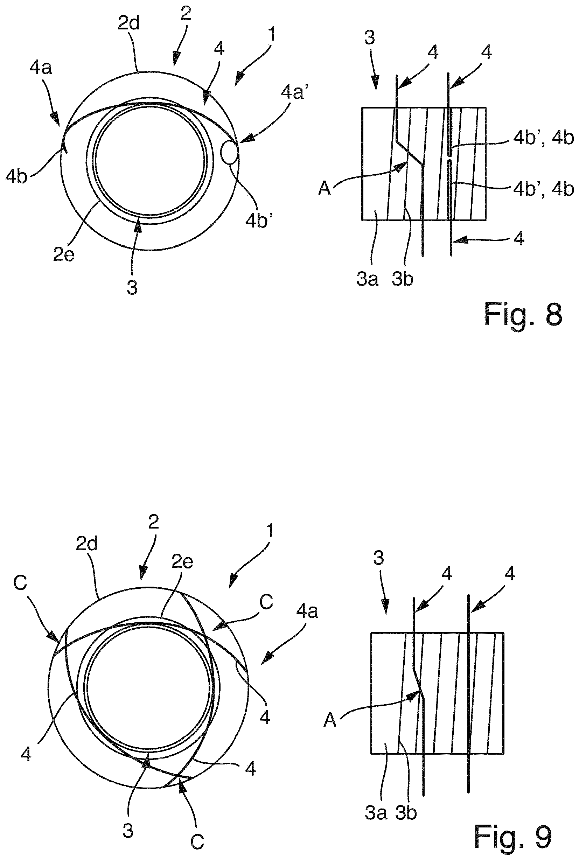

Figur 8 zeigt im linken Teil der Abbildung einen Querschnitt durch eine erfindungsgemäße Leitungsanordnung 1 mit einem einzelnen Kopplungselement 4, welches sich ähnlich wie bei der Ausgestaltung gemäß Figur 1 über einen Teil des Umfangs der Leitungsanordnung 1 erstreckt - vorliegend etwa über den halben Umfang. An dem einen Ende 4a ist wiederum eine Umbiegung 4b vorgesehen, während an dem anderen Ende 4a' eine Schlaufe oder Öse 4b' ausgebildet ist - insbesondere, um auf diese Weise die bereits mehrfach angesprochene endständige Verdickung des Kopplungselements 4 zu bewirken. Die Verdickung könnte im Zuge einer alternativen Ausgestaltung auch nicht endständig angeordnet sein.

Im rechten Teil von Figur 8 sind in einer Draufsicht mögliche (axiale) Verläufe des Kopplungselements 4 dargestellt. Insbesondere kann dieses den bei Bezugszeichen A dargestellten axialen Versatz aufweisen, um eine Profillücke 3b der Innenkomponente 3 gezielt zu überbrücken und für eine Anlage im Wesentlichen im Bereich der Außenfläche 3a der Innenkomponente zu sorgen. Des Weiteren ist ein endständiger Stoß von Innenkomponenten 4 im Bereich von Schlaufen oder Umbiegungen 4b', 4b dargestellt, welche das Rutschen von Kopplungselementen 4 aneinander vorbei verhindern sollen.

Figur 9 zeigt in zwei Teilabbildungen eine andere Ausgestaltung der Erfindung, welche in Grundzügen der Ausgestaltung gemäß Figur 1 entspricht. Allerdings kommt es hier zu einer Überschneidung benachbarter Kopplungselemente 4 an bestimmten, über den Umfang verteilten Kreuzungsstellen C. Hierauf wurde bereits im Zusammenhang mit Figur 6 hingewiesen. Die einzelnen Kopplungselemente 4 können im Bereich der Kreuzungsstellen C geeignete Strukturen aufweisen, die ein undefiniertes Rutschen der Kopplungselemente 4 aneinander vorbei verhindern.

Im rechten Teil von Figur 9 sind wiederum mögliche axiale Verlaufsformen der Kopplungselemente 4 in einer Draufsicht gezeigt - wiederum mit axialem Versatz (Bezugszeichen A) und ohne axialen Versatz.

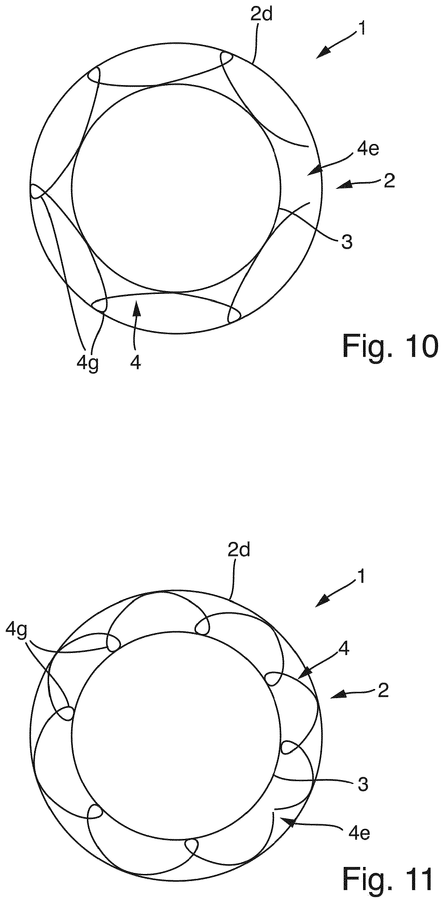

Figur 10 zeigt ein einzelnes Kopplungselement 4, welches sich analog zu den Figuren 5 bis 7 im Wesentlichen über einen vollen Umfang der Leitungsanordnung 1 erstreckt und bei Bezugszeichen 4e geöffnet ist. Die Ausgestaltung gemäß Figur 10 entspricht im Wesentlichen derjenigen gemäß Figur 6 - mit der Ausnahme, dass an den äußeren Kontaktstellen mit der Außenkrempe 2d des Balgs 2 schleifenförmige Anlagestrukturen 4g ausgebildet sind.

Dagegen entspricht die Ausgestaltung gemäß Figur 11 im Wesentlichen der in Figur 7, weil hier die schleifenförmigen Anlagestrukturen 4g innenliegend ausgebildet sind und für eine Kontaktierung der Innenkomponente 3 sorgen.

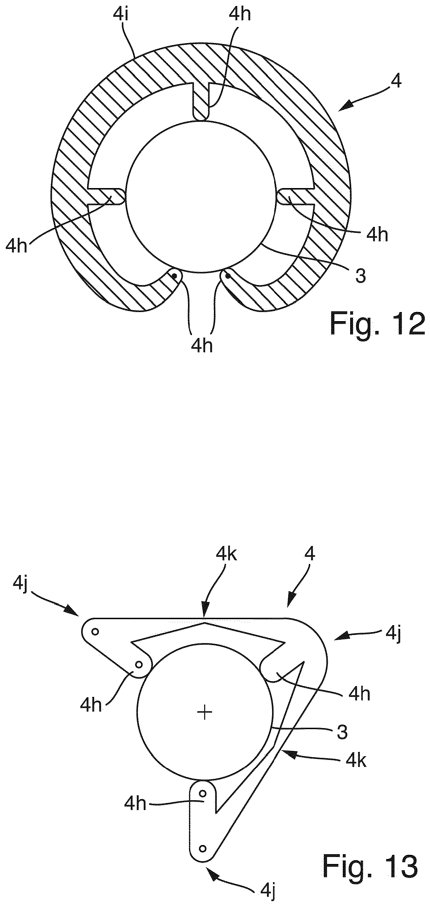

Figuren 12 und 13 zeigen dagegen relativ massive Kopplungselemente 4, die beispielsweise als Stanzteile aus Metallblech ausgebildet sein können und die über ihren Umfang verteilt eine Reihe von radialen Vorsprüngen 4h aufweisen, mit denen sie die Innenkomponente 3 einer Leitungsanordnung (die ansonsten nicht dargestellt ist) kontaktieren.

Das Kopplungselement 4 gemäß Figur 12 liegt mit seiner (im Wesentlichen kreisrunden) Außenumfangsfläche 4i im Bereich der Außenkrempe eines (nicht gezeigten) Balgs an. Die Montage erfolgt vorzugsweise - insbesondere vor Einbringen der Innenkomponente 3 - durch geeignetes Verformen, beispielsweise Verdrehen, des gezeigten Kopplungselements 4.

Das Kopplungselement 4 gemäß Figur 13 weist bei Bezugszeichen 4j relativ massive Bereiche auf, während es in den Bereichen 4k relativ dünn und entsprechend leicht verformbar ausbildet ist. Bei Bezugszeichen 4j ist es im Bereich der massiven Stellen außen abgerundet ausgebildet und sorgt hier für eine Kontaktierung der Außenkrempe eines nicht gezeigten Balgs. Dabei ist die Ausgestaltung nicht auf die exemplarisch gezeigte, im Wesentlichen dreieckige Formgebung beschränkt. Die dünnen Stellen bei Bezugszeichen 4k schaffen die geforderte Montagemöglichkeit, indem das Kopplungselement zunächst zusammengedrückt wird, etwa bis sich die endständigen Vorsprünge 4h berühren, dann in die betreffende Leitungsanordnung eingeführt und dort wieder aufgeweitet wird, um anschließend die Innenkomponente 3 einzubringen.

Abschließend zeigt Figur 14 schematisch eine Grundschwingung (oben) und weitere Schwingungsmoden, also die dazugehörigen Schwingungsformen, höherer Ordnung, wie sie sich bei Leitungsanordnungen der hier beschriebenen Art (ohne erfindungsgemäße Dämpfung) ausbilden können. Bei Stäben (Längsschwingungen) mit konstantem Querschnitt sind die höheren Eigenfrequenzen ganzzahlige Vielfache der 1. Eigenfrequenz, und die zu den höheren Eigenfrequenzen gehörenden Schwingungsmoden sehen so aus, wie in Bild 14 idealisierend dargestellt ist. Bei Biegeschwingungen (Radialschwingungen) sehen die Schwingungsformen etwas anders aus, und die höheren Eigenfrequenzen fallen nicht mehr mit Vielfachen der 1. Eigenfrequenz zusammen. Erfindungsgemäß kann nun die Balgdämpfung verbessert werden, indem wenigstens ein Kopplungselement der gezeigten Art, vorzugsweise jedoch mehrere Kopplungselemente, dort positioniert wird bzw. werden, wo sich ansonsten Schwingungsbäuche ausbilden könnten. Für die erste Eigenmode (oberste Darstellung in Figur 14) wäre dies beispielsweise etwa genau die Mitte des Bauteils. Wird dort ein Kopplungselement angeordnet, so kann sich diese Schwingungsform nicht ausbilden. Gleiches gilt für die Eigenmoden höherer Ordnung, wenn man die Lage der jeweiligen Schwingungsbäuche berücksichtigt. Durch gezielte Positionierung einer Mehrzahl von Kopplungselementen ist es auf diese Weise möglich, alle im Betrieb relevanten Schwingungsformen an einer Ausbildung zu hindern, wenn man die Abbildung Figur 14 zu Rate zieht. Dabei kann sich ein gegebenes Kopplungselement - je nach Lage - günstig, d.h. dämpfend auf eine Mehrzahl von Eigenmoden auswirken.

In der Praxis wird eine derartige Positionierung von Kopplungselementen dazu führen, dass der schwingende Balg in zwei oder mehr ungleiche Balgpakete mit ungleichem Schwingungsverhalten "unterteilt" wird. Auf diese Weise ist es zusätzlich erreichbar, dass sich die Schwingungen der einzelnen Balgpakete durch (destruktive) Phasenverschiebung gegenseitig positiv beeinflussen, das heißt für eine Unterdrückung der Schwingungsausbildung sorgen.

In der Praxis wird ein Balg bzw. eine Leitungsanordnung je nach konstruktiver Ausgestaltung bestimmte bevorzugte Schwingungsfrequenzen (Eigenfrequenzen) aufweisen, was dem Fachmann an sich bekannt ist. Die axiale Position des Kopplungselements bzw. der Kopplungselemente sollte dann je nach Balgdesign (Eigenfrequenzen bzw. Eigenformen) und in Abhängigkeit von der erwarteten Anregung des Balgs angepasst werden, um eine gezielte, fallspezifische Bedämpfung der angeregten Eigenschwingform des Balgs durch eine gezielte axiale Positionierung des Kopplungselements zu erreichen.

## Patentansprüche

1. Leitungsanordnung (1), aufweisend:
einen zumindest abschnittweise gewellten Metallschlauch (2);
eine Innenkomponente (3), die zumindest über eine Teillänge des Metallschlauchs radial innerhalb desselben angeordnet ist; und
wenigstens ein Kopplungselement (4, 4'), welches Kopplungselement zwischen einer Außenkrempe (2d) des Metallschlauchs (2) und einer Außenfläche (3a) der Innenkomponente (3) angeordnet ist und welches Kopplungselement dazu ausgebildet ist, den Metallschlauch (2) durch mechanische Kopplung mit der Innenkomponente (3) zu bedämpfen, wobei das wenigstens eine Kopplungselement (4, 4') zumindest im Betrieb der Leitungsanordnung (1) einerseits eine Außenkrempe (2d) des Metallschlauchs (2) und andererseits die Außenfläche (3a) der Innenkomponente (3) kontaktiert;
**dadurch gekennzeichnet,**
**dass** die Innenkomponente (3) als Wickelschlauch mit Profillücken (3b) ausgebildet ist und dass das Kopplungselement (4, 4') für einen Eingriff in Profillücken (3b) der Innenkomponente (3) ausgebildet und dabei vorzugsweise an eine Steigung dieser Profillücken (3b) angepasst ist.

2. Leitungsanordnung (1) nach Anspruch 1,
**dadurch gekennzeichnet, dass**
der Metallschlauch (2) als Balg ausgebildet ist.

3. Leitungsanordnung (1) nach Anspruch 1 oder 2,
**dadurch gekennzeichnet, dass**
das Kopplungselement (4, 4') den Metallschlauch (2) und/oder die Innenkomponente (3) an einer Anzahl von Kontaktstellen berührt, wobei vorzugsweise das Kopplungselement (4, 4') an den Kontaktstellen abgerundet oder umgebogen (4b) ausgestaltet ist.

4. Leitungsanordnung (1) nach einem der Ansprüche 1 bis 3,
**dadurch gekennzeichnet, dass**
das Kopplungselement (4, 4') als ein im Wesentlichen über wenigstens einen vollen Umfang der Innenkomponente (3) und/oder des Metallschlauchs (2) sich erstreckendes Element ausgebildet ist.

5. Leitungsanordnung (1) nach einem der Ansprüche 1 bis 4,
**dadurch gekennzeichnet, dass**
das Kopplungselement (4, 4') als ein über einen Teilumfang der Innenkomponente (3) und/oder des Metallschlauchs (2) sich erstreckendes Element ausgebildet ist, wobei vorzugsweise mehrere solcher Kopplungselemente (4, 4') über einen vollen Umfang der Innenkomponente (3) und/oder des Metallschlauchs (2) verteilt angeordnet sind, höchst vorzugsweise zumindest paarweise überlappend (C).

6. Leitungsanordnung (1) nach Anspruch 4 oder 5,
**dadurch gekennzeichnet, dass**
das Kopplungselement (4, 4') als zumindest einfach unterbrochene (4e) geometrische Struktur oder in anderer Weise verformbar ausgebildet ist, um das Kopplungselement (4, 4') durch die lichte Weite des Metallschlauchs (2) im Bereich einer Innenkrempe (2e) desselben einzuführen und dann in den Bereich einer Außenkrempe (2d) desselben aufzuweiten.

7. Leitungsanordnung (1) nach einem der Ansprüche 1 bis 6,
**dadurch gekennzeichnet, dass**
das Kopplungselement (4, 4') als ein biegbares, insbesondere radial aufweitbares Blechteil ausgebildet ist oder dass das Kopplungselement (4, 4') als ein insbesondere federnder Drahtabschnitt ausgebildet ist.

8. Leitungsanordnung (1) nach einem der Ansprüche 1 bis 7,
**dadurch gekennzeichnet, dass**
das Kopplungselement (4, 4') Verdickungen, Nasen oder eine Materialdicke aufweist, die größer sind/ist als eine halbe Breite der Außenkrempe (2d) im Betrieb der Leitungsanordnung (1), insbesondere bei Rückbezug auf Anspruch 5.

9. Leitungsanordnung (1) nach einem der Ansprüche 1 bis 8,
**dadurch gekennzeichnet, dass**
eine Materialdicke des Kopplungselements (4, 4') kleiner oder gleich einer Breite von Profillücken (3b) der Innenkomponente ist.

10. Leitungsanordnung (1) nach einem der Ansprüche 1 bis 9,
**dadurch gekennzeichnet, dass**
das wenigstens eine Kopplungselement (4, 4') klemmend zwischen Außenkrempe (2d) des Metallschlauchs (2) und Innenkomponente (3) gehalten ist.

11. Leitungsanordnung (1) nach einem der Ansprüche 1 bis 10,
**dadurch gekennzeichnet, dass**
das wenigstens ein Kopplungselement (4, 4') an seinen Kontaktstellen mit dem Metallschlauch (2) und/oder mit der Innenkomponente (3) stoffschlüssig verbunden ist, vorzugsweise verschweißt.

12. Leitungsanordnung (1) nach einem der Ansprüche 1 bis 11,
**dadurch gekennzeichnet, dass**
das wenigstens eine Kopplungselement (4, 4') eine gezielte axiale Positionierung relativ zum Metallschlauch (2) zwecks Bedämpfung bestimmter Schwingungen der Leitungsanordnung (1) aufweist, vorzugsweise dass das wenigstens eine Kopplungselement (4, 4') im Wesentlichen am Ort oder in der Nähe eines Schwingungsbauchs einer unbedämpften Schwingungsmode des Metallschlauchs (2) oder der Gesamtanordnung aus Metallschlauch (2) und Innenkomponente (3) angeordnet ist.

13. Leitungsanordnung (1) nach einem der Ansprüche 1 bis 12,
**dadurch gekennzeichnet, dass**
mehrere Kopplungselemente (4, 4') bei verschiedenen Positionen entlang der Leitungsanordnung (1) vorgesehen sind, um im Wesentlichen alle relevanten Schwingungsmoden zu unterbinden.

14. Leitungsanordnung (1) nach einem der Ansprüche 1 bis 13,
**dadurch gekennzeichnet, dass**
durch Anordnung mehrerer Kopplungselemente (4, 4') bei verschiedenen Positionen entlang der Leitungsanordnung (1) eine Aufteilung des Metallschlauchs (2) in zwei oder mehr vorzugsweise ungleiche Schlauchpakete oder Schlauchabschnitte erreicht ist, wobei insbesondere die Aufteilung des Metallschlauchs (2) derart gewählt ist, dass die Schwingungen der Schlauchpakete oder Schlauchabschnitte sich durch Phasenverschiebung gegenseitig beeinflussen, vorzugsweise destruktiv.

15. Leitungsanordnung (1) nach einem der Ansprüche 1 bis 14,
**dadurch gekennzeichnet, dass**
die Position des wenigstens einen Kopplungselements (4, 4') auf die zu einer gegebenen Schwingungs-Eigenfrequenz gehörende Eigenform oder Schwingungsform oder Schwingungsmode des Metallschlauchs (2) abgestimmt ist, vorzugsweise dass das wenigstens eine Kopplungselement (4, 4') im Wesentlichen am Ort oder in der Nähe eines Schwingungsbauchs einer unbedämpften Schwingungsmode des Metallschlauchs (2) oder der Gesamtanordnung aus Metallschlauch (2) und Innenkomponente (3) angeordnet ist.

16. Leitungsanordnung (1) nach einem der Ansprüche 1 bis 15,
**dadurch gekennzeichnet, dass**
der Metallschlauch (2) und die Innenkomponente (3), mit Ausnahme etwaiger Anbindungsstellen in den endständigen Anschlussbereichen der Leitungsanordnung (1) und/oder mit Ausnahme der Position des wenigstens einen Kopplungselements (4, 4'), insbesondere gemäß einem der Ansprüche 12 bis 15, radial voneinander beabstandet sind.

## Claims

1. Duct arrangement (1), having:
a metal hose (2) which is corrugated at least in some sections;
an inner component (3) which is arranged radially inside the metal hose at least over part of the length thereof; and
at least one coupling element (4, 4'), which coupling element is arranged between an outer crest (2d) of the metal hose (2) and an outer surface (3a) of the inner component (3) and which coupling element is designed to damp the metal hose (2) by mechanical coupling to the inner component (3), wherein the at least one coupling element (4, 4') makes contact, on the one hand, with an outer crest (2d) of the metal hose (2) and, on the other hand, with the outer surface (3a) of the inner component (3), at least during operation of the duct arrangement (1);
**characterised in that**
the inner component (3) is in the form of a stripwound hose having profile gaps (3b), and the coupling element (4, 4') is designed for engagement in profile gaps (3b) of the inner component (3) and is preferably matched to a pitch of those profile gaps (3b).

2. Duct arrangement (1) according to claim 1,
**characterised in that**
the metal hose (2) is in the form of a bellows.

3. Duct arrangement (1) according to claim 1 or 2,
**characterised in that**
the coupling element (4, 4') touches the metal hose (2) and/or the inner component (3) at a number of contact points, the coupling element (4, 4') preferably being rounded or bent over (4b) at the contact points.

4. Duct arrangement (1) according to any one of claims 1 to 3,
**characterised in that**
the coupling element (4, 4') is in the form of an element that extends substantially over at least a full circumference of the inner component (3) and/or of the metal hose (2).

5. Duct arrangement (1) according to any one of claims 1 to 4,
**characterised in that**
the coupling element (4, 4') is in the form of an element that extends over part of the circumference of the inner component (3) and/or of the metal hose (2), wherein preferably a plurality of such coupling elements (4, 4') are distributed over a full circumference of the inner component (3) and/or of the metal hose (2), most preferably overlapping at least pairwise (C).

6. Duct arrangement (1) according to claim 4 or 5,
**characterised in that**
the coupling element (4, 4') is in the form of a geometric structure having at least a single gap (4e) or is deformable in some other way in order that the coupling element (4, 4') can be inserted through the inside width of the metal hose (2) in the region of an inner crest (2e) thereof and then widened into the region of an outer crest (2d) thereof.

7. Duct arrangement (1) according to any one of claims 1 to 6,
**characterised in that**
the coupling element (4, 4') is in the form of a flexible, especially radially expansible sheet metal part, or the coupling element (4, 4') is in the form of a length of wire, especially a length of resilient wire.

8. Duct arrangement (1) according to any one of claims 1 to 7,
**characterised in that**
the coupling element (4, 4') has thickened portions, projections or a material thickness that is/are greater than half the width of the outer crest (2d) during operation of the duct arrangement (1), especially when appended to claim 5.

9. Duct arrangement (1) according to any one of claims 1 to 8,
**characterised in that**
a material thickness of the coupling element (4, 4') is smaller than or equal to a width of profile gaps (3b) of the inner component.

10. Duct arrangement (1) according to any one of claims 1 to 9,
**characterised in that**
the at least one coupling element (4, 4') is held clamped between the outer crest (2d) of the metal hose (2) and the inner component (3).

11. Duct arrangement (1) according to any one of claims 1 to 10,
**characterised in that**
the at least one coupling element (4, 4') is bonded, preferably welded, at its contact points to the metal hose (2) and/or to the inner component (3).

12. Duct arrangement (1) according to any one of claims 1 to 11,
**characterised in that**
the at least one coupling element (4, 4') has specific axial positioning relative to the metal hose (2) for the purpose of damping specific vibrations of the duct arrangement (1); preferably the at least one coupling element (4, 4') is arranged substantially at the location of or in the vicinity of an anti-node of an undamped vibration mode of the metal hose (2) or of the total arrangement comprising the metal hose (2) and the inner component (3).

13. Duct arrangement (1) according to any one of claims 1 to 12,
**characterised in that**
a plurality of coupling elements (4, 4') are provided at various positions along the duct arrangement (1) in order to suppress substantially all relevant vibration modes.

14. Duct arrangement (1) according to any one of claims 1 to 13,
**characterised in that**
by arrangement of a plurality of coupling elements (4, 4') at various positions along the duct arrangement (1), the metal hose (2) is divided into two or more preferably unequal hose assemblies or hose sections, the division of the metal hose (2) especially being chosen in such a way that the vibrations of the hose assemblies or hose sections influence one another, preferably destructively, by phase displacement.

15. Duct arrangement (1) according to any one of claims 1 to 14,
**characterised in that**
the position of the at least one coupling element (4, 4') is matched to the natural mode or vibration form or vibration mode of the metal hose (2) associated with a given vibration natural frequency; preferably the at least one coupling element (4, 4') is arranged substantially at the location of or in the vicinity of an anti-node of an undamped vibration mode of the metal hose (2) or of the total arrangement comprising the metal hose (2) and the inner component (3).

16. Duct arrangement (1) according to any one of claims 1 to 15,
**characterised in that**
the metal hose (2) and the inner component (3) are spaced apart from one another radially, with the exception of any attachment points in the terminal connection regions of the duct arrangement (1) and/or with the exception of the position of the at least one coupling element (4, 4'), especially according to any one of claims 12 to 15.

## Revendications

1. Système de canalisation (1), comprenant :
un tuyau métallique (2) au moins partiellement ondulé ;
un composant intérieur (3) qui est disposé radialement à l'intérieur du tuyau métallique sur au moins une partie de la longueur de celui-ci ; et
au moins un élément d'accouplement (4, 4'), lequel élément d'accouplement est disposé entre un rebord extérieur (2d) du tuyau métallique (2) et une surface extérieure (3a) du composant intérieur (3) et lequel élément d'accouplement est conçu pour amortir le tuyau métallique (2) par accouplement mécanique avec le composant intérieur (3), l'au moins un élément d'accouplement (4, 4') venant en contact, au moins pendant le fonctionnement du système de canalisation (1), avec un rebord extérieur (2d) du tuyau métallique (2) d'une part et la surface extérieure (3a) du composant intérieur (3) d'autre part ;
**caractérisé en ce que**
le composant intérieur (3) est conçu comme un tuyau enroulé pourvu d'interstices profilés (3b) et **en ce que** l'élément d'accouplement (4, 4') est conçu pour s'engager dans des interstices profilés (3b) du composant intérieur (3) et est adapté de préférence à une inclinaison de ces interstices profilés (3b).

2. Système de canalisation (1) selon la revendication 1,
**caractérisé en ce que**
le tuyau métallique (2) est conçu comme un soufflet.

3. Système de canalisation (1) selon la revendication 1 ou 2,
**caractérisé en ce que**
l'élément de canalisation (4, 4') touche le tuyau métallique (2) et/ou le composant intérieur (3) en un certain nombre de points de contact, de préférence l'élément d'accouplement (4, 4') étant arrondi ou plié (4b) au niveau des points de contact.

4. Système de canalisation (1) selon l'une des revendications 1 à 3,
**caractérisé en ce que**
l'élément d'accouplement (4, 4') est conçu comme un élément s'étendant sensiblement sur au moins une circonférence complète du composant intérieur (3) et/ou du tuyau métallique (2).

5. Système de canalisation (1) selon l'une des revendications 1 à 4,
**caractérisé en ce que**
l'élément d'accouplement (4, 4') est réalisé sous la forme d'un élément s'étendant sur une partie de la circonférence du composant intérieur (3) et/ou du tuyau métallique (2), de préférence une pluralité de ces éléments d'accouplement (4, 4') étant disposés de manière répartie sur toute la circonférence du composant intérieur (3) et/ou du tuyau métallique (2), le plus préférablement en se chevauchant au moins par paires (C).

6. Système de canalisation (1) selon la revendication 4 ou 5,
**caractérisé en ce que**
l'élément d'accouplement (4, 4') est conçu comme une structure géométrique interrompue au moins une fois (4e) ou est sinon conçu pour être déformable afin d'introduire l'élément d'accouplement (4, 4') dans la largeur intérieure du tuyau métallique (2) dans la région d'un rebord intérieur (2e) de celui-ci puis pour étirer celui-ci dans la région d'un rebord extérieur (2d).

7. Système de canalisation (1) selon l'une des revendications 1 à 6,
**caractérisé en ce que**
l'élément d'accouplement (4, 4') est réalisé sous la forme d'une pièce de tôle pliable, notamment étirable radialement, ou **en ce que** l'élément d'accouplement (4, 4') est réalisé sous la forme d'une portion de fil notamment élastique.

8. Système de canalisation (1) selon l'une des revendications 1 à 7,
**caractérisé en ce que**
l'élément d'accouplement (4, 4') comporte des épaississements, des ergots ou a une épaisseur de matière supérieure à la moitié de la largeur du rebord extérieur (2d) lorsque le système de canalisation (1) est en fonctionnement, en particulier en référence à la revendication 5.

9. Système de canalisation (1) selon l'une des revendications 1 à 8,
**caractérisé en ce que**
une épaisseur de matière de l'élément d'accouplement (4, 4') est inférieure ou égale à une largeur d'interstices profilés (3b) du composant intérieur.

10. Système de canalisation (1) selon l'une des revendications 1 à 9,
**caractérisé en ce que**
l'au moins un élément d'accouplement (4, 4') est maintenu par serrage entre le rebord extérieur (2d) du tuyau métallique (2) et le composant intérieur (3).

11. Système de canalisation (1) selon l'une des revendications 1 à 10,
**caractérisé en ce que**
l'au moins un élément d'accouplement (4, 4') est relié par liaison de matière, de préférence par soudage, à ses points de contact avec le tuyau métallique (2) et/ou avec le composant intérieur (3).

12. Système de canalisation (1) selon l'une des revendications 1 à 11,
**caractérisé en ce que**
l'au moins un élément d'accouplement (4, 4') présente un positionnement axial ciblé par rapport au tuyau métallique (2) dans le but d'amortir des oscillations déterminées du système de canalisation (1), de préférence **en ce que** l'au moins un élément d'accouplement (4, 4') est disposé sensiblement à l'emplacement ou à proximité d'un ventre d'oscillation d'un mode d'oscillation non amorti du tuyau métallique (2) ou de tout le système formé du tuyau métallique (2) et du composant intérieur (3) .

13. Système de canalisation (1) selon l'une des revendications 1 à 12,
**caractérisé en ce que**
plusieurs éléments d'accouplement (4, 4') sont prévus à différentes positions le long du système de canalisation (1) afin de supprimer sensiblement tous les modes d'oscillation pertinents.

14. Système de canalisation (1) selon l'une des revendications 1 à 13,
**caractérisé en ce que**
une division du tuyau métallique (2) en deux tronçons de tuyau ou portions de tuyau ou plus, de préférence inégaux, est obtenue par un ensemble de plusieurs éléments d'accouplement (4, 4') à différentes positions le long du système de canalisation (1), en particulier la division du tuyau métallique (2) étant choisie de telle sorte que les oscillations des tronçons de tuyau ou des portions de tuyau s'influencent mutuellement par déphasage, de préférence de manière destructive.

15. Système de canalisation (1) selon l'une des revendications 1 à 14,
**caractérisé en ce que**
la position de l'au moins un élément d'accouplement (4, 4') est adaptée à la forme propre ou à la forme d'oscillation ou au mode d'oscillation du tuyau métallique (2) appartenant à une fréquence d'oscillation propre donnée, de préférence **en ce que** l'au moins un élément d'accouplement (4, 4') est disposé sensiblement à l'emplacement ou à proximité d'un ventre d'oscillation d'un mode d'oscillation non amorti du tuyau métallique (2) ou de tout le système formé par le tuyau métallique (2) et le composant intérieur (3).

16. Système de canalisation (1) selon l'une des revendications 1 à 15,
**caractérisé en ce que**
le tuyau métallique (2) et le composant intérieur (3), à l'exception de tous points de liaison situés dans les régions de raccordement terminales du système de canalisation (1) et/ou à l'exception de la position de l'au moins un élément d'accouplement (4, 4'), en particulier selon l'une des revendications 12 à 15, sont espacés radialement l'un de l'autre.
